# EUROPÄISCHE PATENTSCHRIFT

(11) **EP 1 087 144 B1**
(45) Veröffentlichungstag und Bekanntmachung des Hinweises auf die Patenterteilung: **30.11.2005**
(21) Anmeldenummer: 00810741.9
(22) Anmeldetag: 21.08.2000
(51) Int. Cl.: F04D 29/12

(54) **Tandem-Gleitringdichtung an Pumpen für cryogene Medien**
Tandem mechanical seal for cryogenic pumps
Joint tandem tournant pour pompes cryogéniques

(30) Priorität: 23.09.1999 CH 173999
(43) Veröffentlichungstag der Anmeldung: 28.03.2001
(73) Patentinhaber: Cryomec AG, CH-4123 Allschwil (CH)
(72) Erfinder: Tornare, Jean Elie, 4422 Arisdorf (CH); Drouvot, Philippe, 68730 Blotzheim (FR)
(74) Vertreter: Felber, Josef

(56) Entgegenhaltungen:
- DE-A- 3 804 183
- FR-A- 1 089 234
- US-A- 4 560 173
- US-A- 5 795 129
- US-A- 5 941 531

## Beschreibung

Die vorliegende Erfindung betrifft eine Tandem-Gleitringdichtung zum Einbau in Pumpen, die für das Pumpen von cryogenen Medien eingesetzt werden, um deren Antriebsachse gegenüber dem Pumpeninneren abzudichten. Unter cryogenen Medien werden im Folgenden tiefkalte Flüssigkeiten ab ca. -100°C verstanden, also zum Beispiel die Bestandteile der Luft in Flüssigform wie Stickstoff (N₂) auf unter -196°C, Sauerstoff (O₂) auf unter -183°C und Argon (Ar) auf unter -186°C, sowie auch Wasserstoff (H₂) bei -253°C, etc. Im Fachjargon werden die genannten Elemente in flüssiger Form mit Liquid Nitrogen (LiN), Liquid Oxygen (Lox) und Liquid Argon (LAr) und Liquid Hydrogen (LH2) bezeichnet. Solche tiefkalten Flüssigkeiten werden im grosstechnischen Massstab hergestellt, indem die Atmosphärenluft durch Abkühlung und Reinigung in ihre Bestandteile zerlegt wird oder im Fall von Wasserstoff Wasser in seine Bestandteil zerlegt wird. Die einzelnen reinen und flüssigen Bestandteile werden dann in speziellen Cryotanks unter Atmosphärendruck gelagert und für den Umschlag mit Lkw transportiert, welche mit speziell isolierten Cryotanks ausgerüstet sind. Durch einen gewissen unvermeidbaren Wärmeeintrag aus der Umgebung verdampft fortlaufend ein Teil der sich ja nahe beim Siedezustand befindlichen cryogenen Flüssigkeit. Über eine genügend lange Zeitperiode verdampft der ganze Tankinhalt bei gleich bleibender Temperatur unter ansteigendem Druck im Tankinnern. Beim Umschlag von cryogenen Flüssigkeiten, also beim Umpumpen von einem Tank in einen ändern, oder auch beim Entnehmen von Flüssigkeit, um sie zum Beispiel einem industriellen Prozess zuzuführen, muss ständig gegen das ungewollte Verdampfen der Flüssigkeit gekämpft werden. Je mehr cryogene Flüssigkeit verdampft, um so mehr geht als solche verloren und muss als Verlust betrachtet werden. Die Pumpen sind eine besondere Schwachstelle beim Umschlag. Die Förderflüssigkeit befindet sich beim Eintritt in die Pumpe nahe bei ihrem Siededruck. Eine cryogene Pumpe muss daher so konstruiert sein, dass sie bei einem verhältnismässig hohen Ansaugdruck pumpt und auch im Pumpeninnem der Druck nicht abfällt, denn bei einem allfälligen Unterdruck würde die angesaugte Flüssigkeit augenblicklich verdampfen. Die dabei entstehenden Kavitäten können verursachen, dass die Pumpe trocken läuft und Schaden nimmt. Über das Gehäuse und die Antriebswelle der Pumpe fliesst laufend und unvermeidbar Wärme in die Pumpe hinein, sodass besonders im Raum auf der Motorseite des Pumpenrades, in welchem nur etwa der Saugdruck der Pumpe im Pumpmedium vorherrscht, die tiefkalte Flüssigkeit leicht verdampfen kann. Die Dichtung, welche die rotierende Antriebswelle gegenüber dem Pumpeninnem abdichtet, ist daher von Gas und nicht von Flüssigkeit umgeben. Es handelt sich also um eine trocken laufende Dichtung. Üblicherweise werden diese Dichtungen von Labyrinthdichtungen gebildet. Von der Pumpeninnenseite her drängt das lokal verdampfte Pumpmedium auf dem Ansaugdruck in die Dichtung hinein und will längs der Antriebsachse gegen den Motor hin strömen. Um diese Leckage zu minimieren, pumpt man von der Motorseite der Achse her ein gefiltertes Sperrgas auf einem geringfügig tieferen Druck, zum Beispiel um 0.2bar tiefer als der Ansaugdruck der Pumpe, zum Aufbau eines Gegendrucks in die Labyrinthdichtung. Bei einer kleinen Cryopumpe von ca. 40kW Leistung benötigt man etwa 15 Normal-m³ (also m³ bei Atmosphärendruck) Stickstoff pro Stunde als Sperrgas, und bei grossen Pumpen mehr als das Doppelte, nur um eine Grössenordnung anzugeben. Diese Methode hat daher den Nachteil, dass man erstens ein gesondertes Sperrgas einsetzen muss, nämlich vorzugsweise Stickstoff, und somit eine ganze Einrichtung mit Tank, Filter und Druckregler hierfür nötig ist, und zweitens zieht der Einsatz eines Sperrgases unweigerlich nach sich, dass die zu pumpende cryogene Prozessflüssigkeit, wenn auch nur wenig, so aber doch etwas mit Sperrgas verunreinigt wird. Diese Verunreinigungen werden von den Anwendern mehr und mehr moniert und in einigen Fällen nicht mehr toleriert.

Als Alternative zu einer Labyrinthdichtung wurden auch schon Gleitringdichtungen mit Spiralnut-Oberfläche eingesetzt. Solche Dichtungen weisen auf einer ihrer Dichtringflächen eine Anzahl spiralförmig nach aussen führende flächenhafte Vertiefungen von bloss ca. einem halben Hunderstelmillimeter auf. Dreht der Dichtring mit den spiralförmigen Nuten in einer solchen Umdrehungsrichtung, dass die schräg zur Ringperipherie verlaufenden Mündungen in Umdrehungsrichtung zeigen, so dringt Umgebungsgas in die Nuten ein und zwischen den Gleitringen entsteht sodann ein Staudruck, welcher für ein permanentes Gaskissen zwischen den Gleitringen sorgt, sodass diese reibungsfrei laufen. Es muss jedoch wiederum ein Sperrgas in den Raum eingepumpt werden, in welcher sich die Dichtung befindet, um den Saugdruck der Pumpe zu kompensieren. Daher sind die Nachteile, nämlich der Bedarf an Einrichtungen für die Bereitstellung, Filterung und das Pumpen des Sperrgases sowie auch die Verunreinigung der Prozessflüssigkeit mit Sperrgas nicht eliminiert. Aus der US 5 941 531 (McCowey Christopher D. et al.) ist zum Beispiel eine solche Doppel-Gas-Dichtung mit einem Rotor und zwei beidseits anliegende Statoren bekanntgeworden, wobei die einander zugewandten Flächen der Statoren mit spiralförmig verlaufenden Nuten versehen sind, zur Schaffung eines Gaspolsters im Betrieb. Diese Dichtung erlaubt dank einer besonderen Gestaltung der Metallbälge einen besonders kompakten und einfachen Bau. Sie ist jedoch nicht für cryogene Medien geeignet, weil sie mit elastomeren O-Ringe arbeitet. Solche brechen teilweise bereits unterhalb von -20°C und sind deshalb im Zusammenhang mit cryogenen Medien durchaus nicht einsetzbar. Die Pumpe arbeitet zum Abdichten des Prozessgases mit einem Sperrgas in Form eines Inertgases wie etwa Stickstoff. Wenn der Druck des Sperrgases jedoch höher ist als jener des Prozessgases, so leckt inertes Sperrgas in geringen Mengen in das Prozessgas hinein und kann dieses verunreinigen.

Die Aufgabe der vorliegenden Erfindung ist es deshalb, eine Dichtung an Pumpen für cryogene Medien zu realisieren, welche erstens ohne fremdes Sperrgas auskommt, sodass Verunreinigungen des Pumpmediums unmöglich sind, die zweitens reibungsfrei läuft und drittens daher eine bisher unerreicht hohe Standzeit erreicht.

Diese Aufgabe wird gelöst von einer Dichtung für die Antriebsachse einer Pumpe zum Pumpen cryogener Flüssigkeiten, wobei die Dichtung als Tandemdichtung ausgeführt ist, indem ein Gleitring, dessen beidseitige Gleitflächen mit spiralförmigen, an der äusseren Peripherie mündenden Nuten versehen ist, fest auf die Antriebsachse montiert ist, und an dessen Gleitflächen je ein Gleitring anschliesst, der über einen Metallbalg dicht mit dem abzudichtenden pumpenseitigen Gehäusedeckel einerseits und dem motorseitigen Gehäusedeckel andrerseits verbunden ist, und die sich dadurch auszeichnet, dass der Raum ausserhalb des Gleitringes über eine vom Pumpenausgang abgezweigte Leitung mit Pumpmedium versorgbar ist, wobei ein Regelkreis vorhanden ist, mittels dessen das Medium nach Heizung und Filtrierung mittels eines Druckdifferenzreglers auf dem Ansaugdruck der Pumpe gasförmig in diesen Raum förderbar ist.

In den Zeichnungen wird die Dichtung anhand eines Längsschnittes durch die Antriebsachse einer Cryopumpe gezeigt und nachfolgend anhand dieser Zeichnungen im einzelnen beschrieben und ihre Funktion wird erläutert.
Es zeigt:
- Figur 1:: Einen Gleitring in perspektivischer Ansicht von einer Seite her gesehen, mit Blick auf die eine Gleitfläche, auf welcher ein teilweise aufgeschnittener Dichtring aufliegt;
- Figur 2:: Eine Cryopumpe mit erfindungsgemässer Dichtung in einem Längsschnitt durch das Zentrum der Antriebsachse;
- Figur 3:: Ein Schema zur Versorgung der erfindungsgemässen Dichtung mit Gas von der gepumpten Flüssigkeit für das aufzubauende Gaskissen zwischen den Dichtflächen.

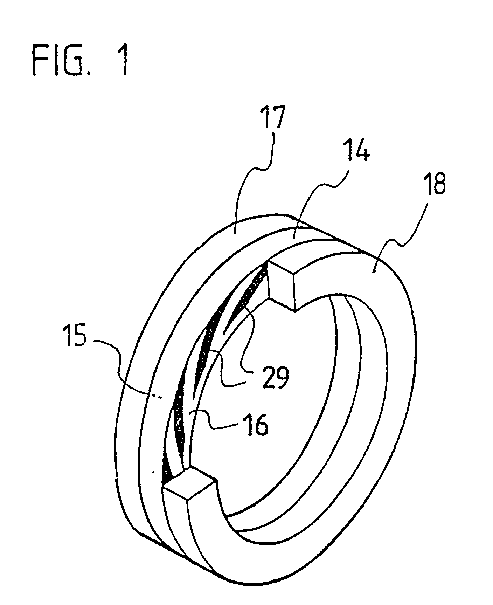

Die Grundlage der vorliegenden Dichtung ist ein Gleitring 14 mit spiralförmig aus dessen Gleitflächen 15,16 ausgenommenen flächigen Nuten 29, wie das hier in Figur 1 dargestellt ist, wo der Gleitring 14 von einer Seite her gesehen gezeigt ist. Diese Nuten sind bloss etwa einen halben Hundertstelmillimeter tief. Würde man den Gleitring 14 auf die andere Seite umdrehen, so würden die dort vorhanden spiralförmigen Nuten 29 gerade im umgekehrten Sinne angeordnet sein. Sie verlaufen also auf der einen, hier einsehbaren Fläche im Uhrzeigersinn nach aussen an die Peripherie des Gleitringes 14, und auf der gegenüberliegenden Gleitringseite 15 gerade umgekehrt, im Gegenuhrzeigersinn nach aussen an die Peripherie des Gleitringes 14. Dreht sich der Gleitring 14 in der Zeichnung im Uhrzeigersinn, so laufen auf beiden Seiten des Gleitringes 14 die dort jeweils angeordneten spiralförmigen flächigen Nuten 29 jeweils mit ihren Mündungen voraus. Liegt nun an beiden Gleitringseiten 15,16 je ein Dichtring 18 an, und dreht der Gleitring 14 mit hinreichender Geschwindigkeit mit den äusseren Mündungen der Nuten 29 voraus, so fangen diese Umgebungsgas ein, kanalisieren es gegen das Zentrum des Gleitringes 14 hin und bilden zwischen Gleitring 14 und Dichtring 18 je ein Gaspolster, sodass die mechanische Reibung aufgehoben wird. Solche Dichtungen sind im Prinzip bekannt.

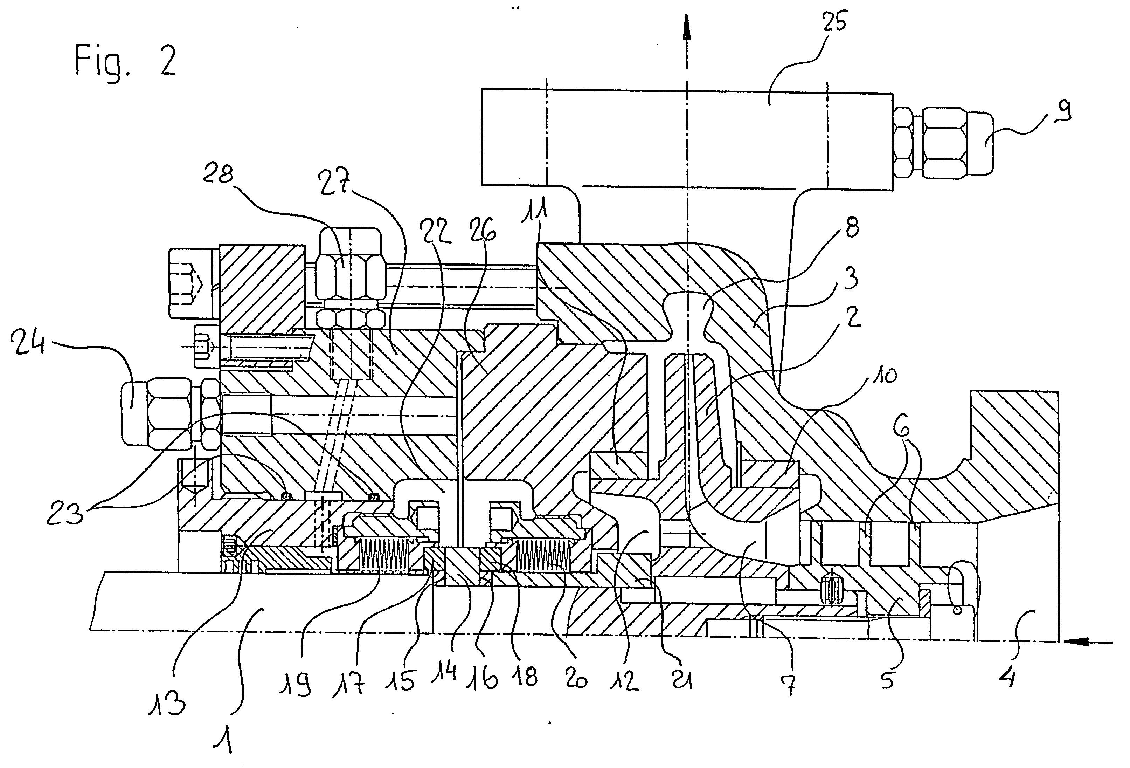

Die Figur 2 zeigt die Pumpe mit der neuen Dichtung mit ihren wesentlichen Teilen in einem Längsschnitt durch die Pumpenantriebsachse. In der Zeichnung ist also der Pumpenmotor, der allerdings nicht gezeigt ist, auf der linken Seite angeordnet, und die Achse 1 verläuft von dort nach rechts und trägt am anderen Ende das Pumpenrad 2, das innerhalb des Pumpengehäuses 3 dreht. Am vorderen Ende 4 des Pumpengehäuses 3 befindet sich also der Ansaugstutzen der Pumpe. Das Pumpenrad 2 weist gegen vorne ein Schneckenrad 5 auf. Dessen Aussenseite bildet sozusagen ein grosses Gewinde, sodass eine archimedische Schraube 6 gebildet ist. Der entsprechende spiralförmig verlaufende Flügel endet vorne in einer scharfen Kante. Bei Drehung "schneidet" diese Kante sozusagen cryogene Flüssigkeit ab und "schraubt" diese gegen das Pumpenrad 2 hin. Im Kanal 7 des Pumpenrades wird die cryogene Flüssigkeit infolge der Fliehkraft, die auf Grund der Drehung des Pumpenrades wirkt, beschleunigt und daher radial nach aussen gedrückt. Im rund um das Laufrad 2 der Pumpe verlaufenden Raum 8 im Innern des Pumpengehäuses 3 befindet sich daher die in dieser Weise gepumpte Flüssigkeit auf einem erhöhten Druck und wird sodann durch den Pumpenauslass 25 aus dem Pumpengehäuse 3 gefördert. Das Laufrad 2 seinerseits ist in Labyrinth-Büchsen 10,11 im Pumpengehäuse abgedichtet. Auf der hier linken Seite 12 des Pumpenrades 2 befindet sich ebenfalls cryogene Flüssigkeit, die jedoch dort zum Teil verdampfen mag. Der in ihr vorherrschende Druck bewegt sich um den Ansaugdruck herum. Doch schon der Ansaugdruck beträgt deutlich mehr als der Atmosphärendruck, zum Beispiel 2 bar, sonst würde ja das Medium durch das Ansaugen sogleich verdampfen. Durch das Pumpen wird der Druck im Medium typischerweise auf ca. 4 bis 6 bar gesteigert. Das Problem besteht nun darin, den Raum links des rotierenden Laufrades 2 gegenüber der rotierenden Antriebsachse und namentlich gegenüber dem Motor abzudichten. Hierzu wird nach der hier vorgeschlagenen Lösung eine Tandem-Gleitringdichtung eingesetzt, die wie folgt aufgebaut ist: Zunächst ist ein Gleitring 14 mit beidseits je einer in der Rotationsebene liegenden Gleitfläche 15,16 auf die Antriebsachse 1 gestülpt und mit dieser über alle rechts von ihm liegenden Elemente 21,2 zusammen mit dem Schneckenrad 5 verspannt, sodass dieser Gleitring 14 also mit der Antriebsachse 1 mitdreht. An die Gleitflächen 15,16 schliesst je ein Dichtring 17,18 an, der über je ein Verbindungsstück fest und dicht mit einem Metallbalg 19,20 verbunden ist. Der Metallbalg 19 links ist stationär in einer motorseitigen Stellschraube 13 eingebaut, während der Metallbalg 20 auf der rechten Seite des Gleitrings 14 stationär mit dem Gehäusedeckel 26 verbunden ist. Die möglichst gasdichte Abdichtung muss letztlich zwischen dem Raum 12 rechts des Metallbalges 20, der mit Vorspannung montiert ist und sich dann innerhalb desselben nach links erstreckt, und dem Raum 22 ausserhalb des rotierenden Gleitringes 14 einerseits erzielt werden, und andrerseits zwischen diesem Raum 22 und jenem innerhalb des Gleitringes 14 auf dessen linker Seite, der sich dann innerhalb des Metallbalges 19 längs der Antriebsachse erstreckt. Links von dieser Tandemdichtung ist die Stellschraube 13 nämlich nur noch mittels einiger O-Ringe 23 gegenüber dem Gehäusedeckel 27 abgedichtet. Idealerweise, das heisst natürlich bis auf eine geringe unvermeidbare Leckage, soll also kein Gas vom Raum 12 links des Laufrades 2 der Pumpe in den Raum zwischen der rotierenden Antriebsachse 1 und dem Pumpengehäuse links der Tandemdichtung strömen können. Mit dieser soweit beschriebenen Anordnung alleine würde jedoch die Dichtung und Lagerung nicht funktionieren, herrscht doch rechts vom rechten Metallbalg 20 ein Druck von 2bar und mehr, während links davon Atmosphärendruck herrscht. Unter diesen Bedingungen würde bei Rotation kein Gaspolster aufgebaut, denn gegen den von innen anliegenden Druck könnte kein Gas von der Peripherie zwischen die Dichtflächen gelangen und dort als Gaspolster wirken. Ausserdem würde verdampfte cryogene Flüssigkeit in grosser Menge vom Pumpeninnern, also vom Raum 12 aus, zunächst innerhalb des Metallbalges 20 längs der Antriebsachse nach links strömen, und dann zwischen dem stationären Dichtring 18 und dem rotierenden Gleitring 14 radial nach aussen in den Raum 22 strömen, und von dort auf der linken Seite des Gleitringes 14 zwischen jenem und dem Dichtring 17 zur Antriebsachse 1 und schliesslich längs jener gegen links hin nach aussen. Damit sich zwischen dem Gleitring 14 und den an seinen beiden Seiten anschliessenden Dichtringen 17,18 ein Gaskissen zur Lagerung bzw. zur Eliminierung der Gleitreibung aufbauen kann, muss im Raum 22 ein annähernd gleicher Druck vorherrschen, wie er auf der Innenseite der Dichtringe 17,18 vorherrscht. Ausserdem muss der Gleitring 14 auf beiden Seiten mit spiralförmig angeordneten, nach aussen hin mündenden Nuten ausgerüstet sein, und die Nuten müssen in der richtigen Richtung verlaufen. Nehmen wir an, die Antriebsachse drehe sich so, dass sie sich auf der in der Zeichnung oberen Seite in die Zeichnungsblattebene hineindreht, also von rechts her gesehen im Uhrzeigersinn drehe. Dann müssen die spiralförmigen Nuten in der rechten Gleitfläche im Uhrzeigersinn nach aussen hin verlaufen, und in der linken Gleitfläche im Gegenuhrzeigersinn spiralförmig nach aussen verlaufen. Der Trick zur Realisierung der Lagerung ohne gesondertes Sperrgas besteht nun darin, dass man am Druckanschluss 9 der Pumpe etwas Flüssigkeit abzweigt und diese unter Wärmezufuhr, zum Beispiel mittels einer Heizung, verdampft, und dann dieses Gas, also gewissermassen gefiltertes Prozessgas, durch den Einlass 24 in den Raum 22 ausserhalb des Gleitringes 14 einpumpt, um einen leichten Überdruck im Raum 22 diesseits des Dichtringes 18 gegenüber dem Raum 12 jenseits des Dichtringes 18 zu erzielen. Unter diesen Bedingungen vermag der Gleitring 14 bei Rotation mit seinen sich voraus drehenden Nutenmündungen Gas einzufangen und zwischen seinen Flächen und den anliegenden Dichtringen 17,18 je ein Gaskissen aufzubauen, sodass die reibungsfreie Lagerung gewährleistet ist. Der am Metallbalg 19 montierte Dichtring 17 links des Gleitringes 14 kann mechanisch über die fein einstellbare Stellschraube 13 mehr oder weniger stark an den Gleitring 14 angepresst werden, indem der Metallbalg von links her mechanisch mit Druck beaufschlagt wird, um den jenseits des Dichtringes 17 herrschenden höheren Druck möglichst zu kompensieren. Trotzdem wird durch die zwischen dem Dichtring 17 und dem Gleitring 14 gebildete Dichtung eine gewisse Mikroleckage nicht zu vermeiden sein. Diese wird durch den Anschluss 28 kanalisiert und ist jedoch so gering, dass sie ohne weiteres in Kauf genommen werden kann. Sie bewegt sich bei ca. einem Normalliter pro Stunde, was eine im Vergleich zur Pumpleistung geradezu vemachlässigbare Menge ist.

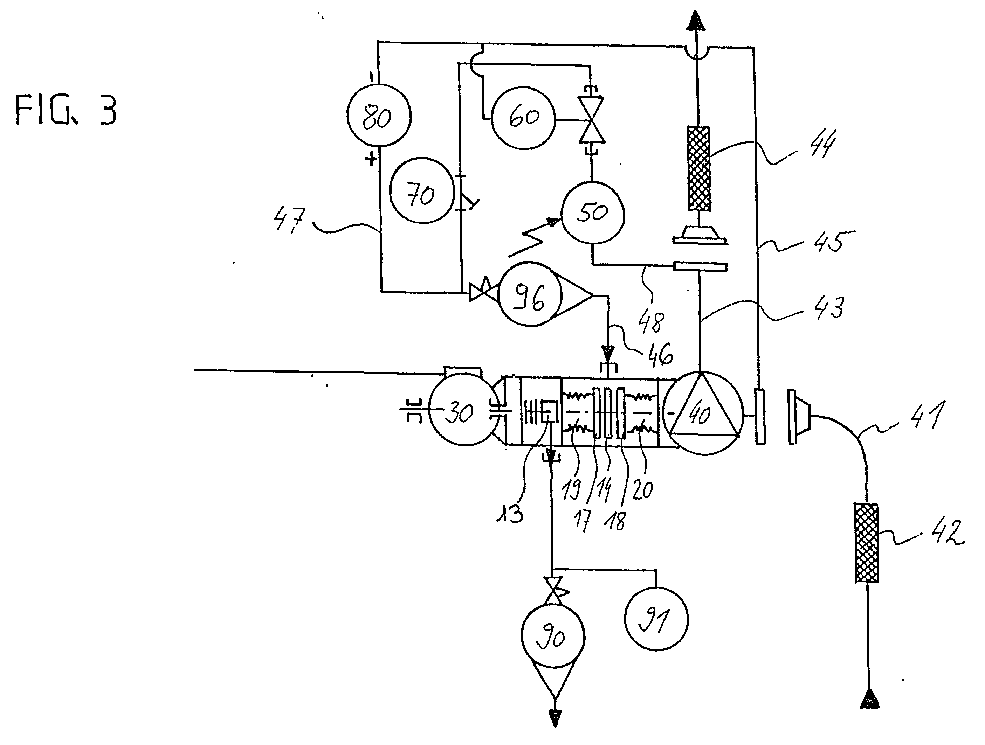

Um den optimalen Druck im Raum 22 automatisch zu regeln und auch den richtigen Anpressdruck des Dichtringes 17 an den Gleitring 14 einzustellen, ist ein Regelkreis vorgesehen, der nachfolgend anhand von Figur 3 beschrieben wird. Diese Figur 3 zeigt ein vereinfachtes Schema mit ausschliesslich den zur Erstellung des Regelkreises nötigen Elementen. Der Antriebsmotor der Pumpe, hier eine Elektromotor, ist mit 30 bezeichnet, die Pumpe selbst mit 40. Das Pumpengehäuse beherbergt die Tandem-Gleitringdichtung mit den bereits beschriebenen Elementen, nämlich dem zentralen, rotierenden Gleitring 14, den beiden anliegenden stationären Dichtringen 17,18 sowie den stationären Metallbälgen 19,20, mit denen diese Dichtringe 17,18 verbunden sind. Mit 13 ist die Einstell-Einrichtung angedeutet, mittels welcher sich der Anpressdruck des linken Dichtringes 17 auf den Gleitring 14 regulieren lässt. Es geht nun ja darum, gegenüber dem im Pumpeninnern herrschenden Druck, welcher ja wenigstens dem Ansaugdruck entspricht, einen Gegendruck im Raum ausserhalb des Gleitringes 14 zur Kompensation aufzubauen, sodass sich bei Rotation des Gleitringes 14 auf seinen beiden Seiten ein Gaskissen aufbaut. Die Pumpe 40 saugt über die Leitung 41, die auch ein flexibler Schlauch 42 sein kann, auf einem Ansaugdruck von zum Beispiel 2 bar cryogene Flüssigkeit an und fördert diese auf einem Druck von zum Beispiel 4 bis 6 bar durch die Leitung 43, gegebenenfalls ebenfalls über einen flexiblen Schlauch 44, wie das angedeutet ist. Noch vor der Pumpe wird nun über die Leitung 45 flüssiges cryogenes Medium abgenommen und dieses wird hernach durch einen Druckdifferenzanzeiger 80 geleitet. Auf der gegenüberliegenden Seite dieses Druckdifferenzanzeigers 80 ist die dortige Leitung 47 mit der Druckleitung 48 verbunden, welche cryogenes Medium nach der Pumpe, also auf dem Pumpdruck, aus der Pumpleitung 43 abzweigt. Diese cryogene Flüssigkeit wird sodann durch eine elektrische Heizung 50 geführt, sodass sie verdampft. Hernach wird das so gewonnene Prozessgas durch einen Druckdifferenz-Controller 60 geführt, sowie danach noch durch einen Gasfilter 70. Auf der hier unteren Seite des Druckdifferenzanzeigers 80 liegt also der Druck an, welcher das verdampfte gepumpte Flüssigmedium aufweist, während auf der oberen Seite des Druckdifferenzanzeigers 80 der Ansaugdruck der Pumpe anliegt. Der Druckdifferenz-Controller 60 lässt nun mehr oder weniger Gas von der elektrischen Heizung 50 her durch den Filter 70 und schliesslich über die Leitung 46 in den Raum ausserhalb des Gleitringes 14 strömen, um darin einen Gegendruck zum jeweils vorherrschenden Druck im Pumpengehäuse aufzubauen. Und der dort vorherrschende Druck entspricht dem Ansaugdruck der Pumpe. So muss also der Druckdifferenz-Controller 60 gerade soviel Gas passieren lassen, bis die Druckdifferenz beim Druckdifferenz-Anzeiger 80 Null oder annähernd Null ist. Die Gaszufuhr jenseits der Tandem-Dichtung wird mit einem Durchflussmeter 96 ermittelt und so zugeführte Gas wird in die Umgebung geblasen. Die unvermeidliche Leckage nach aussen wird durch einen zusätzlichen Durchflussmesser 90 ermittelt. Diese Messung ist jedoch nicht absolut notwendig und bleibt von Fall zu Fall fakultativ. Ein Temperatursensor 91 ist als Alarmstop eingebaut. Sollte das Leckagegas auf eine Temperatur von -30°C ansteigen, so stellt der Pumpenmotor ab. Der Druck schliesslich, mit dem der linke Metallbalg 19 und somit der links am Gleitring 14 anliegende Dichtring 17 beaufschlagt wird, wird so eingestellt, dass der gemessene Leckagedurchfluss minimal ist.

## Patentansprüche

1. Dichtung für die Antriebsachse (1) einer Pumpe (40) zum Pumpen cryogener Flüssigkeiten, wobei die Dichtung als Tandemdichtung ausgeführt ist, indem ein Gleitring (14), dessen beidseitige Gleitflächen (15,16) mit spiralförmigen, an der äusseren Peripherie mündenden Nuten versehen ist, fest auf die Antriebsachse (1) montiert ist, und an dessen Gleitflächen (15,16) je ein Gleitring (17,18) anschliesst, der über einen Metallbalg (19,20) dicht mit dem abzudichtenden pumpenseitigen Gehäusedeckel (26) einerseits und dem motorseitigen Gehäusedeckel (27) and erseits verbunden ist, ***dadurch gekennzeichnet,* dass** der Raum (22) ausserhalb des Gleitringes (14) über eine vom Pumpenausgang abgezweigte Leitung (48) mit Pumpmedium versorgbar ist, wobei ein Regelkreis vorhanden ist, mittels dessen das Medium nach Heizung (50) und Filtrierung (70) mittels eines Druckdifferenzreglers (60) auf dem Ansaugdruck der Pumpe gasförmig in diesen Raum förderbar ist.

2. Dichtung nach Anspruch 1, **dadurch gekennzeichnet, dass** der Anpressdruck des motorseitigen Dichtringes (17) der Tandemdichtung über den Metallbalg (19) zur Minimierung der Leckage zwischen Gleitring (14) und motorseitigem Dichtring (17) mittels einer Stellschraube (13) einstellbar ist.

3. Dichtung nach einem der vorhergehenden Ansprüche, **dadurch gekennzeichnet, dass** die spiralförmigen, aus den beiden Gleitflächen (15,16) ausgenommenen flächigen Nuten (29) in so einem geometrischen Sinne nach aussen hin verlaufend angeordnet sind, dass beim Drehen der Antriebsachse (1) die äusseren Mündungen der spiralförmigen Nuten (29) auf beiden Seiten des Gleitringes (14) den Nuten vorauslaufen.

4. Verwendung einer Dichtung nach einem der vorhergehenden Ansprüche zum Abdichten der Antriebsachse (1) einer Pumpe (49) zum Pumpen cryogener Flüssigkeiten.

## Claims

1. A seal for a driveshaft (1) of a pump for pumping cryogenic liquid, whereby the seal is embodied as a tandem axial face seal in that a sliding ring (14), whose sliding faces (15, 16) on both sides are provided with a spiral-shaped groove terminating at the outer periphery, is fixedly mounted on the driveshaft (1), and whose sliding faces (15, 16) are adjoined by a sliding ring (17, 18) each, which on the one side is tightly connected via a metal bellows (19, 20) with the housing cover (26) on the pump side, which is to be sealed, and on the other side with the housing cover (27) on the motor side, **characterized in that** the chamber (22) outside of the sliding ring (14) can be supplied with pump medium through a line (48) branching off the pump outlet, wherein a control circuit is provided, by means of which, after heating (50) and filtering (70), the medium can be conveyed into this chamber in the gaseous state at the suction pressure of the pump by means of a pressure difference controller (60).

2. The seal in accordance with claim 2, **characterized in that** the contact pressure of the sealing ring (17) of the tandem axial face seal on the motor side can be set via the metal bellows (19) for minimizing the leakage between the sliding ring (14) and the sealing ring (17) on the motor side by means of a set screw (13).

3. The seal in accordance with one of the preceding claims, **characterized in that** spiral-shaped flat grooves (29) removed out of the two sliding faces (15, 16) are arranged to extend outward in such a geometric direction that in the course of the rotation of the driveshaft (1) the outer terminations of the spiral-shaped grooves (29) precede the grooves on both sides of the sliding ring (14).

4. Use of a seal in accordance with one of the preceding claims for sealing the driveshaft (1) of a pump (49) for pumping cryogenic liquids.

## Revendications

1. Joint d'étanchéité pour l'arbre moteur (1) d'une pompe (40) destinée à pomper des liquides cryogéniques, ce joint d'étanchéité étant réalisé sous forme de joint en tandem, en ce qu'un anneau glissant (14), dont les surfaces glissantes (15, 16), disposées des deux côtés, sont munies de rainures débouchant à la périphérie extérieure, est fixé sur l'arbre moteur (1), les surfaces de glissement (15, 16) de l'anneau glissant (14) étant raccordées chacune à un anneau glissant (17, 18), qu'un soufflet métallique (19, 20) relie d'un côté de manière étanche au couvercle (26) du corps de pompe, couvercle placé du côté de la pompe et devant être rendu étanche, et d'un autre côté au couvercle (27) du corps de pompe placé du côté du moteur, ***caractérisé en* ce *que*** l'espace (22) à l'extérieur de l'anneau glissant (14) peut, par l'intermédiaire d'une conduite (48) dérivée de la sortie de la pompe, être alimenté en fluide pompé, cependant qu'il existe un circuit de régulation, au moyen duquel le fluide peut, après chauffage (50) et filtrage (70), être refoulé dans cet espace sous forme de gaz à la pression d'aspiration de la pompe, au moyen d'un régulateur de différence de pression (60).

2. Joint d'étanchéité suivant la revendication 1, **caractérisé en ce que** la pression d'appui de l'anneau d'étanchéité (17) - disposé du côté du moteur - du joint d'étancéité en tandem peut se régler au moyen d'une vis de réglage (13), par l'intermédiaire du soufflet métallique (19), pour réduire au minimum la fuite entre l'anneau glissant (14) et le joint d'étanchéité (17) disposé du côté du moteur.

3. Joint d'étanchéité suivant une des revendications précédentes, **caractérisé en ce que** les rainures planes hélicoïdales (29) pratiquées dans les deux surfaces glissantes (15, 16) sont disposées de manière à s'étendre vers l'extérieur dans un sens géométrique tel que, pendant la rotation de l'arbre moteur (1), les embouchures extérieures des rainures hélicoïdales (29) évoluent sur les deux côtés de l'anneau glissant (14) avec une avance par rapport aux rainures.

4. Utilisation d'un joint d'étanchéité suivant une des revendications précédentes pour rendre étanche l'arbre moteur (1) d'une pompe (49) destinée à pomper des liquides cryogènes.
